(19) Europäisches Patentamt
European Patent Office
Office européen des brevets

(11) **EP 2 881 411 A1**

(12) **EUROPÄISCHE PATENTANMELDUNG**

(43) Veröffentlichungstag:
**10.06.2015 Patentblatt 2015/24**

(51) Int Cl.:
***C08G 18/48*** (2006.01)  ***C08G 101/00*** (2006.01)

(21) Anmeldenummer: **13195773.0**

(22) Anmeldetag: **05.12.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder:
- **Albach, Rolf**
  **51061 Köln (DE)**
- **Beaujean, Joern**
  **51375 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Verfahren zur Herstellung von viskoelastischen Polyurethanschaumstoffen auf Basis von phasenstabilen Polyolformulierungen**

(57) Der Gegenstand der vorliegenden Erfindung betrifft ein Verfahren zur Herstellung eines viskoelastischen Polyurethan-Weichschaumstoffs erhältlich durch Umsetzung von Komponente A enthaltend:

A1 90,9 bis 98,9 Gew.-Teile wenigstens eines Polyols mit einer Funktionalität von 2 bis 6, einem Gehalt an $CH_2$-$CH_2$-O-Gruppen (Ethylenoxidgehalt) von 51,0 bis 100 Gew.-%, und einer Hydroxylzahl (OH-Zahl) von $\geq$ 25 mg KOH/g bis $\leq$ 140 mg KOH/g, frei von Polyol mit einer OH Zahl von $\geq$ 150 und $\leq$ 400 mg KOH/g, A2 0 bis 8,0 Gew.-Teile wenigstens eines Polyols mit einer Funktionalität von 2 bis 6, einem Ethylenoxidgehalt von 0 bis 50,9 Gew.-%, und einer OH-Zahl von $\geq$ 8 mg KOH/g bis $\leq$ 140 mg KOH/g, frei von Polyol mit einer OH Zahl von $\geq$ 150 und $\leq$ 400 mg KOH/g, A3 0,5 bis 25,0 Gew.-Teile (bezogen auf die Summe der Gew.-Teile der Komponenten A1 und A2) Wasser und/ oder eines physikalischen Treibmittels, A4 0,1 bis 8,1 Gew.-Teile (bezogen auf die Summe der Gew.-Teile der Komponenten A1 und A2) Hilfs- und Zusatzstoffe wie

d) Katalysatoren,
e) oberflächenaktive Zusatzstoffe,
f) Pigmente oder Flammschutzmittel,

mit Komponente B enthaltend Diisocyanate, Polyisocyanate, Mischungen von Diisocyanaten und/oder Polyisocyanaten, deren Mischungen von Isomeren, Carbodiimiden, Uretdioniminen oder Präpolymeren, wobei die Umsetzung bei einer Kennzahl von 50 bis 150 erfolgt, und alle Gewichtsteilangaben der Komponenten A1 bis A4 so normiert sind, dass die Summe der Gewichtsteile A1 + A2 in der Zusammensetzung 100 ergibt. Ebenfalls Gegenstand der vorliegenden Erfindung sind viskoelastische Polyurethanschäume erhältlich nach dem erfindungsgemäßen Verfahren und die Verwendung der erfindungsgemäßen viskoelastischen Polyurethanschäume zur Herstellung von Möbelpolsterungen, Textileinlagen, Matratzen, Automobilsitze, Kopfstützen, Armlehnen, Schwämmen, Verbund- und Bauelementen.

EP 2 881 411 A1

**Beschreibung**

Der Gegenstand der vorliegenden Erfindung betrifft ein Verfahren zur Herstellung eines viskoelastischen Polyurethan-Weichschaumstoffs **auf Basis von phasenstabilen** Polyolformulierungen und Polyisocyanaten. Weiterhin betrifft die Erfindung einen viskoelastischen Polyurethan-Weichblockschaumstoff oder viskoelastischen Polyurethan-Weichformschaumstoff, hergestellt nach dem erfindungsgemäßen Verfahren und die Verwendung dieser Schaumstoffe.

Viskoelastische Schaumstoffe, auch Memory-Schaum, low-resilience-Schaum oder energieabsorbierender Schaum genannt, wird heute verbreitet für die Herstellung von Matratzen, Kissen und Dämpfungselementen eingesetzt. Einsatzgebiete findet man in der Orthopädie, im Fahrzeugbau, als Verpackungsmaterial, in Sportartikeln, Spielzeug und Möbeln.

Unter den viskoelastischen Schaumstoffmaterialien besitzen solche aus Polyurethanen sicherlich die größte Bedeutung. Dies liegt zum einen darin begründet, dass sich durch die Wahl der verwendeten Polyol- beziehungsweise Isocyanatkomponenten und gegebenenfalls weiterer Hilfsstoffe die physikalischen Eigenschaften des zu erhaltenden Polyurethanschaumstoffes sehr genau einstellen lassen, zum anderen aber auch daran, dass sich durch die "in situ"-Herstellung (gegebenenfalls vor Ort) Schaumstoffmaterialien nahezu beliebiger und sehr komplexer Form und Struktur herstellen lassen.

Bei der Herstellung von Polyurethanen werden gewöhnlich zwei oder mehrere Flüssigkeitsströme miteinander vereinigt. Die Mischung dieser Flüssigkeitsströme initiiert die Polymerisation und gegebenenfalls das Aufschäumen des polymerisierenden Materials. Polymerisation und Formgebung erfolgen oft in einem Schritt, typischerweise durch Formgebung oder Sprühen der noch im flüssigen Zustand befindlichen Reaktionsmischung. Daneben werden Polyurethane auch oft in Form von Blöcken hergestellt, welche anschließend in die gewünschte Form zurechtgeschnitten werden.

Bei den oben genannten Flüssigkeitsströmen handelt es sich in der Mehrzahl der Fälle auf der einen Seite um eine polyfunktionelle organische Isocyanatkomponente (welche auch oft als "B-Komponente" bezeichnet wird) und auf der anderen Seite um polyfunktionelle Monomere oder Harze, welche Isocyanaten gegenüber eine entsprechende Reaktivität aufweisen und gegebenenfalls weitere Hilfsstoffe enthalten können. Dieses Gemisch, welches vielfach als "A-Komponente" bezeichnet wird, umfasst typischerweise zum größten Teil eine oder mehrere Polyolkomponenten.

Um nun einen Polyurethanschaumstoff bestimmter Zusammensetzung zu erhalten, werden die oben beschriebenen Flüssigkeitsströme vor ihrer Vermischung entsprechend dosiert. Ein Aufschäumen wird dabei normalerweise so erreicht, dass der A-Komponente Wasser zugesetzt wird, welches mit dem Polyisocyanat der B-Komponente unter Bildung eines Amins und unter Freisetzung von $CO_2$ reagiert, welches wiederum als Treibgas fungiert. Alternativ oder zusätzlich zu der Verwendung von Wasser werden oft auch flüchtige inerte organische Verbindungen oder inerte Gase als physikalische Treibmittel verwendet.

Viskoelastische Schaumstoffe zeichnen sich durch eine langsame, graduelle Rückverformung nach einer erfolgten Kompression, aus. Dies äußert sich z.B. in einer hohen Hysterese (> 20 %; in Druck-Spannungskurven bei der Bestimmung der Eindruckhärte nach DIN EN ISO 2439 oder der Stauchhärte nach DIN EN ISO 3386-1-98) oder in einer geringen Kugelrückprallelastizität (< 15 %; Bestimmung nach DIN EN ISO 8307).

Die Mehrzahl der konventionellen Polyurethanschaumstoffe stellen Blockcopolymere dar, welche räumlich getrennte Bereiche verschiedener Phasen mit hohen und niedrigen Glasübergangstemperaturen ($T_G$) aufweisen. Die Glasübergangstemperatur trennt dabei den unterhalb von ihr liegenden spröden energieelastischen Bereich (= Glasbereich) von dem oberhalb von ihr liegenden weichen entropieelastischen Bereich (= gummielastischer Bereich). Diese hohen und niedrigen Glasübergangstemperaturen verschiedener Phasen innerhalb des Polymers grenzen normalerweise den Temperaturbereich ein, innerhalb dessen man das besagte Material verwenden kann. Die DMA- ("dynamic mechanical analysis") Spektren solcher Materialien zeichnen sich üblicherweise durch einen relativ flachen Bereich ("modulus plateau") zwischen den verschiedenen Glasübergängen aus. Eine bevorzugte Methode zur Bestimmung der Glasübergangstemperaturen ($T_G$) ist das Torsionspendel-Verfahren nach DIN EN ISO 6721 B:1996-12, bei dem das Verhältnis von Verlust- und Speichermodul zur Bestimmung herangezogen wird.

Die Phase geringer Glasübergangstemperatur in diesen Materialien leitet sich üblicherweise (obwohl nicht immer) von einem "Block" geringer Glasübergangstemperatur ab, welcher vorgeformt wird und anschließend erst der Polymerisation unterworfen wird. Die Phase hoher Glasübergangstemperatur bildet sich demgegenüber normalerweise erst während der Polymerisation, bedingt durch die dann erfolgende Ausbildung der Urethaneinheiten. Der Block geringer Glasübergangstemperatur (oft auch als "Weichblock" bezeichnet) leitet sich üblicherweise von einer Flüssigkeit oder von einem oligomeren Harz geringer Schmelztemperatur ab, welche eine Vielzahl von gegenüber Isocyanateinheiten reaktiven Gruppen enthalten. Polyether- und Polyesterpolyole sind Beispiele solcher oligomeren Harze.

In konventionellen Polyurethanen ordnen sich die harten (hohe Glasübergangstemperatur) und weichen (geringe Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man entsprechend auch von "phasenseparierten" Materialien.

Viskoelastische Polyurethane stellen in diesem Zusammenhang gewissermaßen einen Spezialfall dar, bei welchen nämlich die oben beschriebene Phasentrennung nur unvollständig oder überhaupt nicht auftritt.

Von einer solchen, von der Polymerstruktur abgeleiteten "Struktur-Viskoelastizität" bei Polyurethan-Weichschäumen mit (überwiegend) offenen Zellen zu unterscheiden ist eine solche Viskoelastizität, die nicht auf die Polymerstruktur sondern auf die Schaumstruktur, konkret auf einen pneumatischen Effekt zurückzuführen ist. In letzterem Falle befinden sich nämlich nahezu geschlossene Zellen innerhalb des Schaumstoffmaterials, also Zellen mit nur einer geringen Öffnung. Durch die geringe Größe der Öffnungen strömt die Luft bei Kompression langsam aus und nach einer Kompression nur langsam wieder ein, was eine verlangsamte Verformung zur Folge hat. Die pneumatisch viskoelastischen Schaumstoffe zeichnen sich dadurch aus, dass der viskoelastische Effekt vergleichsweise wenig temperaturabhängig ist, das heißt die Glasübergangstemperatur liegt nicht in dem Bereich zwischen -20 °C und +50 °C, in dem Schaumstoffe üblicherweise genutzt werden. Das bedeutet, dass in diesem Temperaturbereich keine Phasenübergänge stattfinden und die Eigenschaften sich nicht drastisch verändern. Dies ist technisch oftmals sehr gewünscht.

Die DE-A 3806476 offenbart ein Verfahren zur Herstellung von Polyurethan-Weichformschaumstoffen mit überwiegend offener Zellstruktur. Die strukturviskosen Polyurethan-Weichformschaumstoffe werden durch Umsetzung eines Isocyanatgruppen aufweisenden Präpolymers mit einem Polyol einer OH Zahl von 150 bis 400 mg KOH/g erhalten. Die DE-A 3806476 beschreibt keine pneumatischen, viskoelastischen Schäume, die aus phaseninstabilen oder phasenstabilen Komponenten aufgebaut sind.

Heutige Polyolformulierungen, im Folgenden auch als Komponente A bezeichnet, zur Herstellung viskoelastischer Polyurethan-Weichschäume bestehen aus Wasser, Katalysatoren, Schaumstabilisatoren, Polyethern mit hohem Ethylenoxidgehalt (EO-Gehalt) und Polyethern mit niedrigem EO-Gehalt. Bislang ist noch kein Verfahren zur Herstellung von pneumatisch viskoelastischen Polyurethan-Weichschäumen bekannt, bei dem Komponenten eingesetzt werden, die eine gute Phasenstabilität der Polyolkomponente A aufweisen. Durch die bis heute problematische Entmischung der Polyolkomponente A, enthaltend Polyether mit einem hohen EO- und niedrigem EO-Gehalt, konnte bislang keine zufriedenstellende Lösung des Transports der einzelnen Komponenten gewährleistet werden.

Daher war es Aufgabe der vorliegenden Erfindung ein Verfahren zur Herstellung von pneumatischen viskoelastischen Polyurethan-Weichschäumen bereitzustellen, bei dem die umzusetzenden Komponenten über eine hohe Phasenstabilität verfügen und so eine deutliche Verbesserung des Transports, der Lagerung und auch der Handhabung erreicht werden kann.

Es wurde nun gefunden, dass der Einsatz von 90,9 bis 98,9 Gew.-Teile wenigstens eines Polyetherpolyols mit einem Gehalt an $CH_2$-$CH_2$-O-Einheiten ("Ethylenoxidgehalt") von 51,0 bis 99,7 Gew.-% in der Polyolkomponente A und bis zu 8,0 Gew.-Teile eines Polyether- bzw. Polyesterpolyols mit einem geringen Gehalt an $CH_2$-$CH_2$-O-Einheiten zu einer wesentlich verbesserten Phasenstabilität, bei gleichzeitigem Erreichen eines pneumatisch viskoelastischen Effekts, der auf diese Weise erhaltenen viskoelastischen Polyurethan-Weichschaumstoffe, führt.

Gegenstand der vorliegenden Erfindung ist ein Verfahren zur Herstellung von pneumatisch viskoelastischen Polyurethan-Weichschaumstoffen, erhältlich durch Umsetzung von

Komponente A enthaltend:

A1 90,9 bis 98,9 Gew.-Teile, bevorzugt 91,0 bis 98,0 Gew.-Teile, besonders bevorzugt 93,0 bis 96,0 Gew.-Teile, wenigstens eines Polyols, bevorzugt eines Polyetherpoylols mit einer Funktionalität von 2 bis 6, bevorzugt 3 bis 6, besonders bevorzugt 3 oder 6, einem Gehalt an $CH_2$-$CH_2$-O-Einheiten von 51,0 bis 100 Gew.-%, bevorzugt 69,0-99,7 Gew.-% und einer Hydroxylzahl (OH-Zahl) von $\geq$ 25 mg KOH/g bis $\leq$ 140 mg KOH/g, bevorzugt $\geq$ 35 mg KOH/g bis $\leq$ 112 mg KOH/g, frei von Polyol mit einer OH Zahl von $\geq$ 150 und $\leq$ 400 mg KOH/g,

A2 0 bis 8,0 Gew.-Teile, bevorzugt 0 bis 5,5 Gew.-Teile, besonders bevorzugt 0 Gew.-Teile, wenigstens eines Polyols, bevorzugt eines Polyetherpolyols mit einer Funktionalität von 2 bis 6, bevorzugt von 3 bis 6, einem Gehalt an $CH_2$-$CH_2$-O-Einheiten von 0 bis 50,9 Gew.-%, bevorzugt 0 bis 30,0 Gew.-%, besonders bevorzugt von 0 bis 15,0 Gew.-%, und einer OH-Zahl von $\geq$ 8 mg KOH/g bis $\leq$ 140 mg KOH/g, bevorzugt von $\geq$ 18 mg KOH/g bis $\leq$ 120 mg KOH/g, besonders bevorzugt von $\geq$ 23 mg KOH/g bis $\leq$ 60 mg KOH/g, frei von Polyol mit einer OH Zahl von $\geq$ 150 und $\leq$ 400 mg KOH/g,

A3 0,5 bis 25,0 Gew.-Teile, bevorzugt 1,0 bis 6,0 Gew.-Teile, (bezogen auf die Summe der Gew.-Teile der Komponenten A1 und A2) Wasser und/oder eines physikalischen Treibmittels,

A4 0,1 bis 8,1 Gew.-Teile (bezogen auf die Summe der Gew.-Teile der Komponenten A1 und A2) Hilfs- und Zusatzstoffe wie

a) Katalysatoren,
b) oberflächenaktive Zusatzstoffe,
c) Pigmente oder Flammschutzmittel,

mit Komponente B enthaltend Diisocyanate, Polyisocyanate, Mischungen von Diisocyanaten und/oder Polyisocyanaten, deren Mischungen von Isomeren oder Präpolymeren, wobei die Umsetzung bei einer Kennzahl von 50 bis 150, bevorzugt bei einer Kennzahl von 60 bis 105 erfolgt, besonders bevorzugt bei einer Kennzahl von 65 bis 90, und

alle Gewichtsteilangaben der Komponenten A1 bis A4 so normiert sind, dass die Summe der Gewichtsteile A1 + A2 in der Zusammensetzung 100 ergibt.

Die nach dem erfindungsgemäßen Verfahren hergestellten pneumatisch viskoelastischen Polyurethan-Weichschaumstoffe können als Form- oder auch als Blockschaumstoffe hergestellt werden. Vorzugsweise werden die erfindungsgemäßen Polyurethan-Weichschaumstoffe als Formschaumstoffe hergestellt.

Weiterer Gegenstand der Erfindung sind daher auch die erfindungsgemäß hergestellten pneumatisch viskoelastischen Polyurethanweichschaumstoffe, die als Polyurethan Weichblockschaumstoffe oder vorzugsweise als Polyurethanweichformschaumstoffe vorliegen können.

Komponente A (Polyolformulierung)

Um die Polyole der Komponente A genauer spezifizieren zu können, haben sich im Stand der Technik verschiedene Kenngrößen herauskristallisiert:

i.) Die Hydroxyl-Funktionalität, welche vom Starter-Molekül abhängt, auf dem aufbauend das Polyetherpolyol synthetisiert wird;

ii.) die Hydroxyl- oder OH-Zahl, welche ein Maß für den Gehalt an Hydroxylgruppen ist, und in mg KOH/g angegeben wird. Sie wird gemäß DIN 53240 bestimmt;

iii.) die Molekularmasse ($M_w$), welches ein Maß für die Länge der Polyoxyalkylen-Ketten der Polyetherpolyole ist.

Die oben genannten Größen können dabei über die folgende Gleichung in Bezug zueinander gesetzt werden: 56100 = OH-Zahl · ($M_w$/Hydroxyl-Funktionalität).

Die einzelnen Komponenten A1 bis A4 der Polyolformulierung werden nachfolgend näher beschrieben.

Komponente A1

Komponente A1 enthält 90,9 bis 98,9 Gew.-Teile, bevorzugt 91,0 bis 98,0 Gew.-Teile und besonders bevorzugt 93,0 bis 96,0 Gew.-Teile, wenigstens eines Polyols, bevorzugt eines Polyetherpolyols, mit einer Funktionalität von 2 bis 6, bevorzugt 3 bis 6, besonders bevorzugt 3 oder 6, einem Ethylenoxidgehalt von 51,0 bis 100 Gew.-%, bevorzugt 69,0-99,7 Gew.-%, und einer Hydroxylzahl von ≥ 25 mg KOH/g bis ≤ 140 mg KOH/g, bevorzugt ≥ 35 mg KOH/g bis ≤ 112 mg KOH/g und ist frei von Polyolen mit einer OH Zahl von ≥ 150 und ≤ 400 mg KOH/g.

Gemäß einer weiteren Ausführungsform enthält Komponente A1 90,9 bis 98,9 Gew.-Teile, bevorzugt 91,0 bis 98,0 Gew.-Teile und besonders bevorzugt 93,0 bis 96,0 Gew.-Teile, wenigstens eines Polyetherpolyols, mit einer Funktionalität 3, einem Ethylenoxidgehalt von 51,0 bis 100 Gew.-%, bevorzugt 69,0-99,7 Gew.-%, und einer Hydroxylzahl von ≥ 25 mg KOH/g bis ≤ 140 mg KOH/g, bevorzugt ≥ 35 mg KOH/g bis ≤ 112 mg KOH/g und ist frei von Polyolen mit einer OH Zahl von ≥ 150 und ≤ 400 mg KOH/g.

Gemäß einer weiteren Ausführungsform enthält Komponente A1 90,9 bis 98,9 Gew.-Teile, bevorzugt 91,0 bis 98,0 Gew.-Teile und besonders bevorzugt 93,0 bis 96,0 Gew.-Teile, wenigstens eines Polyetherpolyols, mit einer Funktionalität 6, einem Ethylenoxidgehalt von 51,0 bis 100 Gew.-%, bevorzugt 69,0-99,7 Gew.-%, und einer Hydroxylzahl von ≥ 25 mg KOH/g bis ≤ 140 mg KOH/g, bevorzugt ≥ 35 mg KOH/g bis ≤ 112 mg KOH/g und ist frei von Polyolen mit einer OH Zahl von ≥ 150 und ≤ 400 mg KOH/g.

Als Polyetherpolyole gemäß Komponente A1 werden Verbindungen bezeichnet, die Alkylenoxidadditionsprodukte von Starterverbindungen mit zerewitinoff-aktiven Wasserstoffatomen, also Polyetherpolyole mit einer Hydroxylzahl gemäß DIN 53240 von ≥ 25 mg KOH/g bis ≤ 140 mg KOH/g, vorzugweise von ≥ 35 mg KOH/g bis ≤ 112 mg KOH/g sind.

Für die Polyetherpolyole eingesetzte Starterverbindungen mit zerewitinoff-aktiven Wasserstoffatomen weisen Funktionalitäten von 2 bis 6 auf und sind hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin, Trimethylolpropan und/oder Sorbitol eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Komponente A2

Komponente A2 enthält 0 bis 8,0 Gew.-Teile, bevorzugt 0 bis 5,5 Gew.-Teile, besonders bevorzugt 0 Gew.-Teile, wenigstens eines Polyols, bevorzugt eines Polyetherpolyols mit einer Funktionalität von 2 bis 6, bevorzugt von 3 bis 6, einem Gehalt an $CH_2$-$CH_2$-O-Einheiten (Ethylenoxidgehalt) von 0 bis 50,9 Gew.-%, bevorzugt 0 bis 30,0 Gew.-%, besonders bevorzugt von 0 bis 15,0 Gew.-%, und einer OH-Zahl von $\geq$ 8 mg KOH/g bis $\leq$ 140 mg KOH/g, bevorzugt von $\geq$ 18 mg KOH/g bis $\leq$ 120 mg KOH/g, besonders bevorzugt von $\geq$ 23 mg KOH/g bis $\leq$ 60 mg KOH/g, frei von Polyol mit einer OH Zahl von $\geq$ 150 und $\leq$ 400 mg KOH/g.

In einer weiteren Ausführungsform ist die Komponente A frei von Komponente A2. Durch den möglichst geringen Anteil an Komponenten mit einem niedrigen Ethylenoxidgehalt lässt sich die Phasenstabilität der Komponente A noch weiter verbessern.

Als Polyetherpolyole gemäß Komponente A2 werden Verbindungen bezeichnet, die Alkylenoxidadditionsprodukte von Starterverbindungen mit zerewitinoff-aktiven Wasserstoffatomen, also Polyetherpolyole mit einer Hydroxylzahl gemäß DIN 53240 von $\geq$ 8 mg KOH/g bis $\leq$ 140 mg KOH/g.

Für die Polyetherpolyole eingesetzte Starterverbindungen mit zerewitinoff-aktiven Wasserstoffatomen weisen Funktionalitäten von 2 bis 6 auf, vorzugsweise von 3 bis 6, und sind hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Komponente A3

Als Komponente A3 werden 0,5 bis 25,0 Gew.-Teile, bevorzugt 1,0 bis 6,0 Gew.-Teile (bezogen auf die Summe der Gew.-Teile der Komponenten A1 und A2) Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesondere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Die Reduktion der Emission der viskoelastischen Polyurethan-Weichschäume wird in der Regel durch die Verwendung von reaktiven Katalysatoren realisiert, die durch das Vorhandensein von NCO-reaktiven Gruppen in das Polyurethan-System eingebaut werden.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt

α) Harnstoff, Derivate des Harnstoffs und/oder

β) Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Hierbei können 0,1 bis 8,1 Gew.-Teile, bevorzugt 0,8 bis 2,0 Gew.-Teile eingesetzt werden.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Komponente B

Komponente B enthält Diisocyanate, Polyisocyanate, Mischungen von Diisocyanaten und/oder Polyisocyanaten, deren Mischungen von Isomeren, Carbodiimide, Uretdionimine oder Präpolymere.

Als Diisocyanate, Polyisocyanate, Mischungen von Diisocyanaten und/oder Polyisocyanaten, deren Mischungen von Isomeren werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (I)

$$Q(NCO)_n \qquad (I)$$

in der

n = 2 - 4, vorzugsweise 2 -3, und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen

bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Uretdionimingruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'-und 2,4'- und 2,2'-Diphenylmethandiisocyanat und Polyphenylpolymethylenpolyisocyanat ("Mehrkern-MDI") eingesetzt.

Insbesondere als vorteilhaft hat es sich erwiesen, MDI einzusetzen, welches einen Monomergehalt in einer Menge von 65 bis 90 Gew.-% aufweist. Der Anteil des MDI-2,4'-Isomers am gesamten Monomeranteil im MDI liegt dabei bevorzugt in einer Menge von 5 bis 30 Gew.-%, besonders bevorzugt in einer Menge von 15 bis 25 Gew.-%.

Gemäß einer Ausführungsform wird als Komponente B wenigstens ein Polyisocyanat enthaltend Carbodiimidgruppen und/oder Uretdionimingruppen eingesetzt. Hierbei ist es weiterhin besonders bevorzugt, dass das Polyisocyanat 2,4- und 2,6-Toluylendiisocyanat, 4,4'-und 2,4'- und 2,2'-Diphenylmethandiisocyanat und/oder Polyphenylpolymethylenpolyisocyanat ("Mehrkern-MDI") umfasst.

Besonders bevorzugt werden als Komponente B Präpolymere der genannten Polyisocyanate eingesetzt. Diese sind beispielsweise erhältlich durch Präpolymerisation der genannten Polyisocyanate mit organischen Verbindungen mit mindestens einer Hydroxylgruppe (Komponente B2). Beispielhaft genannt seien ein bis sechs Hydroxylgruppen aufweisende Polyether- und/oder Polyestesterpolyole mit OH-Zahlen von 25-600 mg KOH/g.

In einer bevorzugten Ausführungsform wird als Komponente B ein Präpolymer eingesetzt, welches als Komponente B2 Polyetherpolyol mit einer mittleren Funktionalität von 2 bis 6, bevorzugt von 2 bis 3, besonders bevorzugt 2, einem Gehalt an $CH_2$-$CH_2$-O-Einheiten (Ethylenoxidgehalt) von 0 bis 50,9 Gew.-%, bevorzugt 0 bis 30,0 Gew.-%, besonders bevorzugt von 0 bis 10,0 Gew.-% und einer mittleren OH-Zahl von $\geq$ 25 mg KOH/g bis $\leq$ 600 mg KOH/g, bevorzugt von $\geq$ 25 mg KOH/g bis $\leq$ 120 mg KOH/g.

Die Polyetherpolyole B2 können aus den bereits zuvor unter A1 und A2 genannten Ausgangsstoffen hergestellt werden.

In einer weiteren, besonders bevorzugten Ausführungsform wird als Komponente B ein MDIbasiertes Präpolymer, das Komponente B2, Polyetherpolyol mit einer mittleren Funktionalität von 2 bis 6, bevorzugt von 2 bis 3, besonders bevorzugt 2, einem mittleren Gehalt an $CH_2$-$CH_2$-O-Einheiten (Ethylenoxidgehalt) von 0 bis 50,9 Gew.-%, bevorzugt 0 bis 30,0 Gew.-%, besonders bevorzugt von 0 bis 10,0 Gew.-% und einer mittleren OH-Zahl von $\geq$ 25 mg KOH/g bis $\leq$ 600 mg KOH/g, bevorzugt von $\geq$ 28 mg KOH/g bis $\leq$ 113 mg KOH/g, enthält, und einen NCO-Gehalt von 18 Gew.-% bis 28%, bevorzugt 19,5 bis 25% aufweist, eingesetzt. Ein solches Präpolymer lässt sich beispielsweise durch Umsetzung von MDI, enthaltend 45,0 bis 100 Gew.-%, bevorzugt 53,0 bis 93,0 Gew.-% an 4,4'-MDI, 0 bis 35,0 Gew.-%, an 2,4'-MDI und 0 bis 20,0 Gew.%, bevorzugt 5,0 bis 15,0 Gew.-% an Mehrkern-MDI mit einem eines Polyols, bevorzugt eines Polyetherpolyols der bereits beschriebenen Komponente A2 ist.

Gemäß einer weiteren bevorzugten Ausführungsform enthält die bei der Präpolymerisation eingesetzte Komponente B2 wenigstens ein Polyetherpolyol mit einer Funktionalität von 2, einem Gehalt an $CH_2$-$CH_2$-O-Einheiten (Ethylenoxidgehalt) von 0 bis 50,9 Gew.-%, bevorzugt 0 bis 30,0 Gew.-%, besonders bevorzugt von 0 bis 15,0 Gew.-% und einer OH-Zahl von $\geq$ 28 mg KOH/g bis $\leq$ 113 mg KOH/g.

Die Kennzahl (Index) gibt das prozentuale Verhältnis der tatsächlich eingesetzten IsocyanatMenge zur stöchiometrischen, d.h. für die Umsetzung der OH-Äquivalente berechnete Menge an Isocyanat-Gruppen (NCO)-Menge an.

$$\text{Kennzahl} = [(\text{Isocyanat-Menge eingesetzt}) : (\text{Isocyanat-Menge berechnet})] \bullet 100 \qquad (I)$$

Zur Herstellung der viskoelastischen Polyurethan-Weichschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Gemäß einer bevorzugten Ausführungsform erfolgt die Umsetzung der isocyanatreaktiven Komponenten A mit der Isocyanat-Komponente B bei einer Kennzahl von 60 bis 105 und besonders bevorzugt bei einer Kennzahl von 65 bis 90.

Die nach dem erfindungsgemäßen Verfahren hergestellten pneumatischen viskoelastischen Polyurethan-Weichschaumstoffe zeichnen sich unter anderem dadurch aus, dass sie eine hohe Phasenstabilität der eingesetzten Komponenten aufweisen.

In einer bevorzugten Ausführungsform weisen die bei einer Kennzahl von 70 erhaltenen, erfindungsgemäßen viskoelastischen Polyurethan-Weichschäume eine Härte gemäß DIN EN ISO 3386-1-98 von weniger als 6,0 kPa, bevorzugt weniger als 5,5 kPa und besonders bevorzugt von 1,1 bis 5,0 kPa auf.

Die erfindungsgemäß erhältlichen Polyurethanweichschaumstoffe finden beispielsweise Anwendung in Möbelpolsterungen, Textileinlagen, Matratzen, Automobilsitze, Kopfstützen, Armlehnen, Schwämme und Bauelementen.

**Beispiele**

**Eingesetzte Rohstoffe**

| Polyol A.1.1 | Trifunktionelles Polyalkylenoxid mit einer OH-Zahl von 37 mg KOH/g und einem Ethylenoxidgehalt von ca. 71 Gew.-% |
|---|---|
| Polyol A1.2 | Hexafunktionelles Polyalkylenoxid mit einer OH-Zahl von 100 mg KOH/g und einem Ethylenoxidgehalt von ca. 75,6 Gew.-% |
| Polyol A2.1 | Polypropylenglycol mit einer OH-Zahl von 56 mg KOH/g |

(fortgesetzt)

| | |
|---|---|
| Polyol A2.2 | Trifunktionelles Polyalkylenoxid mit einer OH-Zahl von 35 mg KOH/g und einem Ethylenoxidgehalt von ca. 14 Gew.-% |
| Polyol A2.3 | Polypropylenglycol mit einer OH-Zahl von 512,5 mg KOH/g |
| Polyol A2.4 | Trifunktionelles Polyalkylenoxid mit einer OH-Zahl von 27 mg KOH/g und einem Ethylenoxidgehalt von ca. 14 Gew.-% |
| Polyol A2.5 | Hexafunktionelles Polyalkylenoxid mit einer OH-Zahl von 175 mg KOH/g und einem Ethylenoxidgehalt von ca. 18 Gew.-% |
| A4.1 | Diethanolamin |
| A4.2 | Triethanolamin |
| A4.3 | Diethyldiaminotoluol-Isomerengemisch |
| A4.4 | 2-[(2-[2-(Dimethylamino)ethoxy]ethyl)methylamino]ethanol |
| A4.5 | 1,1' ((3-(Dimethylamino)propyl)imino)bis-2-propanol |
| A4.6 | Dimethylaminopropylharnstoff 75%ig in Polypropylenglycol 200 |
| A4.7 | N-[2-[2-(Dimethylamino)ethoxy]ethyl]-N-methyl-1,3-propandiamin |
| A4.8 | Dimethylaminopropylamin |
| A4.9 | Bis(dimethylaminopropyl)amin |
| A4.10 | Dimethylaminopropylharnstoff gelöst, OH-Zahl 270 mg KOH/g |
| A4.11 | Tegostab® B8409 |
| A4.12 | Tegostab® 8465 |
| A4.13 | Tegostab® B8629 |
| A4.14 | Mesamoll® II |
| A4.15 | 33%ige Lösung von Triethylendiamin |

Bestimmung der Phasenstabilität

Zur Bestimmung der Phasenstabilität der Polyol-Formulierungen werden 100 g Polyol intensiv mit 70 Hz Rührgeschwindigkeit (Pendraulik-Rührer mit Rührteller mit 6,5 cm Durchmesser) durchmischt. Von dieser Mischung werden 10 Gramm in ein Pillengläschen aus Glas abgefüllt. Nach drei Tagen wird das Gläschen bei durchscheinendem Licht visuell auf Phasentrennung bewertet und photographisch dokumentiert. Phasenstabil bedeutet, dass nach 3 Tagen keine Phasentrennung auftritt.

**Tabelle 1:** Polyolformulierungen (A-Komponente)

| | A-I (Vgl.) [Gew.-%] | A-II [Gew.-%] | A-III [Gew.-%] | A-IV [Gew.-%] | A-V [Gew.-%] | A-VI [Gew.-%] | A-VII [Gew.-%] | A-VIII (Vgl.) [Gew.-%] | A-IX(Vgl.) [Gew.-%] | A-X (Vgl.) [Gew.-%] | A-XI [Gew.-%] |
|---|---|---|---|---|---|---|---|---|---|---|---|
| Wasser | 3,53 | 4,20 | 4,21 | 4,19 | 4,20 | 4,48 | 4,2 | 2,41 | 2,25 | 2,25 | 2,25 |
| A1.1 | 79,84 | 94,05 | 94,24 | 93,86 | 93,95 | 93,67 | 94 | 25,63 | 82,95 | 88,07 | 91,4 |
| A2.1 | 14,97 | - | - | - | - | - | - | - | - | - | - |
| A2.2 | - | - | - | - | - | - | - | - | 13,31 | 8,19 | 5,12 |
| A2.3 | - | - | - | - | - | - | - | 15,62 | - | - | - |
| A2.4 | - | - | - | - | - | - | - | 39,14 | - | - | - |
| A2.5 | - | - | - | - | - | - | - | 9,37 | - | - | - |
| A4.2 | - | - | - | - | - | - | - | 0,98 | - | - | - |
| A4.5 | - | - | - | - | - | - | - | 1,08 | - | - | - |
| A4.7 | - | - | - | - | 0,1 | 0,1 | 0,25 | - | 0,05 | 0,05 | 0,05 |
| A4.8 | - | - | - | - | - | - | - | 0,39 | - | - | - |
| A4.10 | - | 0,65 | 0,65 | 0,65 | 0,6 | 0,6 | 0,5 | - | 0,36 | 0,36 | 0,36 |
| A4.11 | 0,81 | 0,45 | 0,45 | 0,45 | 0,45 | 0,45 | 0,45 | - | - | - | - |
| A4.12 | - | 0,20 | - | 0,4 | 0,4 | 0,4 | 0,55 | - | 1,02 | 1,02 | 1,02 |
| A4.13 | - | - | - | - | - | - | - | 0,79 | - | - | - |
| A4.14 | - | - | - | - | - | - | - | 4,59 | - | - | - |
| A4.15 | 0,35 | 0,45 | 0,45 | 0,45 | 0,3 | 0,3 | 0,25 | - | 0,05 | 0,05 | 0,05 |
| Phasenstabil | Nein | Ja | Ja | Ja | Ja | Ja | Ja | Nein | Nein | Nein | Ja |

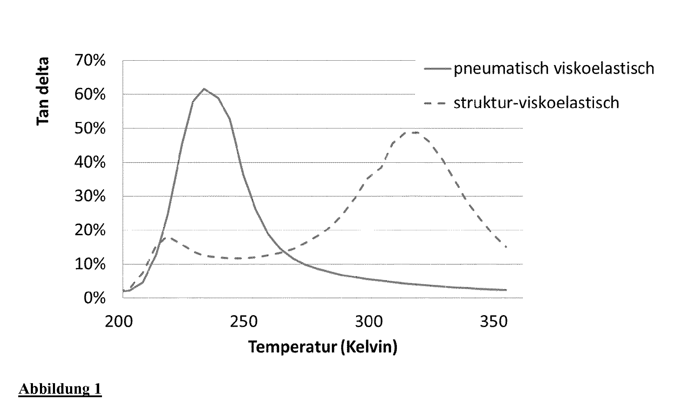

Anhand der Polyolformulierungen A-I, A-IX, A-X aus Tabelle 1 wird deutlich, dass die Polyolformulierungen, bei denen Polyole mit einem Polypropylenoxidgehalt von über 8,0 Gew.-Teilen nicht phasenstabil sind. Das Vergleichsbeispiel A-VIII zeigt, dass eine Umkehr des Verhältnisses der Komponenten A1 und A2 zu einer Polyolformulierung führt, die ebenfalls nicht phasenstabil ist. Zusätzlich ist diese Polyolformulierung nicht zur Herstellung von Schaumstoffen mit den erforderlichen, pneumatischen Eigenschaften geeignet ist (siehe Vergleichsbeispiel PUR XV aus Tabelle 4 und Abbildung 1). Die erfindungsgemäßen Polyolformulierungen A-II bis A-VII und A-XI hingegen sind phasenstabil.

**Tabelle 2:** Isocyanat-Abmischungen (B-Komponente)

| | B-I (Vgl.) [Gew.-%] | B-II (Erf.) [Gew.-%] | B-III (Erf.) [Gew.-%] | B-IV (Erf.) [Gew.-%] | B-V (Erf.) [Gew.-%] | B-VI (Erf.) [Gew.-%] | B-VII (Vgl.) [Gew.-%] |
|---|---|---|---|---|---|---|---|
| 2,2'-MDI | 0,1 | 1,4 | 1,4 | 1,6 | - | - | - |
| 2,4'-MDI | 38,1 | 33,3 | 26,0 | 15,8 | 2 | 2 | 33 |
| 4,4'-MDI | 50,5 | 54,2 | 61,6 | 67,8 | 90 | 90 | 40 |
| Polymer MDI | 11,3 | 11,1 | 11,0 | 14,8 | 8 | 8 | 27 |
| Uretdionimin | - | - | - | 3,7 | - | - | - |
| Polyol B2 | A1.1 | A2.1 | A2.1 | - | A2.3 | A2.1 | A1.1 |
| Mischungsverhältnis Isocyanat:Polyol | 96:4 | 73:27 | 73:27 | 77:23 | 82,5:17,5 | 66:34 | 9:1 |
| NCO-Gehalt [Gew.-%] | 31,8 | 22,7 | 22,7 | 22,0 | 20,4 | 20,4 | 29,0 |
| Alle Isocyanat-Abmischungen sind phasenstabil. | | | | | | | |

**Herstellung der viskoelastischen Polyurethan-Weichschaumstoffe**

Die Komponenten A und B werden gründlich homogenisiert und mit Luft beladen. Anschließend werden die beiden Komponenten A und B mit einem Pendraulik-Rührer mit einer Rührscheibe vom 6,5 cm Durchmesser und einer Rührgeschwindigkeit von 70 s$^{-1}$ für 5 Sekunden im angegebenen Mischungsverhältnis vermischt. Für die Bestimmung der Reaktionsgeschwindigkeit wird die Reaktionsmischung wird in eine mit Papier ausgekleidete nach oben offene 50°C warme Kiste von 1*2*2 dm$^3$ gegossen. Die Einfüllmenge beträgt stets 0,17 kg. Für die Bestimmung der mechanischen Eigenschaften wird die Reaktionsmischung wird in eine mit Trennmittel PURA E1429H NV (Fa. Chemtrend) behandelte Aluminiumform mit einem Volumen von 4 dm$^3$ gegossen, die Form wird für sechs Minuten geschlossen.

Als Startzeit wird der Zeitpunkt definiert, bei dem ein sichtbares Schäumen beginnt.

Als Abbindezeit (auch Fadenziehzeit oder Gelpunkt) wird der Zeitpunkt beschrieben, bei dem man unter Anwendung geeigneter persönlicher Schutzausrüstung mit einem Streichholz Fäden aus dem Reaktionsgemisch ziehen kann.

Als Steigzeit wird der Zeitpunkt angegeben, bei dem das Aufschäumen zum Stillstand gekommen ist.

Die Kernrohdichte wird nach DIN 53420 bestimmt. Zugfestigkeit und Reißdehnung werden nach DIN EN ISO 1798 bestimmt. Die Stauchhärte bei 40% Kompression ("CV40") wird nach DIN EN ISO 3386-1-98 bestimmt.

Der Druckverformungsrest ("DVR") bei 50% Kompression über 22 Stunden bei 70°C wird nach DIN 53572 bestimmt und wird in % angegeben.

Die Weiterreißfestigkeit wird nach AD3574F bestimmt.

Die Kennzahl (Isocyanat Index) gibt das Verhältnis der tatsächlich eingesetzten IsocyanatMenge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100$$

**Tabelle 3:** Herstellung der Polyurethan-Weichschäume

| | PUR I | PUR II | PUR III | PUR IV | PUR V | PUR VI | PUR VII | PUR VIII | PUR IX |
|---|---|---|---|---|---|---|---|---|---|
| | Vgl. | Erf. | Erf. | Erf. | Erf. | Erf. | Erf. | Vgl. | Vgl. |
| Polyolformulierung | A-I | A-II | A-III | A-IV | A-V | A-V | A-VII | A-IX | A-X |
| Isocyanatabmischung | B-I | B-II | B-III | B-III | B-III | B-III | B-IV | B-VI | |
| Kennzahl | 71 | 71 | 71 | 71 | 71 | 71 | 66 | 70 | 70 |
| Startzeit [s] | 8 | 8 | 8 | 8 | 8 | 8 | 8 | 15 | 16 |
| Abbindezeit [s] | 60 | 62 | 58 | 61 | 58 | 59 | 67 | 143 | 148 |
| Steigzeit [s] | 94 | 97 | 91 | 88 | 84 | 84 | 97 | 223 | 228 |
| Kernrohdichte [kg/m$^3$] | 41 | 44 | 46 | 44 | 43 | 42 | n.b. | 65 | 68 |
| Zugfestigkeit [kPa] | 22 | 28 | 33 | 25 | 22 | 20 | n.b. | 40 | 41 |
| Reißdehnung [%] | 107 | 119 | 133 | 114 | 101 | 96 | n.b. | 108 | 115 |
| CV40 [kPa] | 0,9 | 1,5 | 1,4 | 1,3 | 1,2 | 1,1 | n.b. | 2,8 | 2,9 |
| DVR [%] | 3 | 16 | 24 | 4 | 3 | 4 | n.b. | 2 | 3 |
| Weitereißfestigkeit [N/m] | 106 | 96 | 106 | 101 | 90 | 100 | n.b. | 121 | 107 |
| viskoelastisch | ja | ja | ja | ja | ja | ja | ja | nein | ganz schwach |
| pneumatisch | ja | ja | ja | ja | ja | ja | ja | nein | ganz schwach |
| n.b. = nicht bestimmt | | | | | | | | | |

**Tabelle 4:** Herstellung der Polyurethan-Weichschäume Fortsetzung

| | PUR X | PUR XI | PUR XII | PUR XIII | PUR XIV | PUR XV |
|---|---|---|---|---|---|---|
| | Erf. | Erf. | Erf. | Erf. | Erf. | Vgl. |
| Polyolformulierung | A-XI | | | | A-V | A-VIII |
| Isocyanatabmischung | B-V | | B-VI | | | B-VII |
| Kennzahl | 70 | | 80 | 70 | | 59,2 |
| Startzeit [s] | 16 | 17 | 14 | 16 | 16 | 12 |
| Abbindezeit [s] | 141 | 129 | 144 | 140 | 146 | 72 |
| Steigzeit [s] | 209 | 189 | 213 | 203 | 208 | 97 |
| Kernrohdichte [kg/m$^3$] | 67 | 70 | 68 | 79 | 68 | 71 |
| Zugfestigkeit [kPa] | 36 | 28 | 55 | 49 | 38 | 134 |
| Reißdehnung [%] | 87 | 86 | 80 | 98 | 90 | 160 |
| CV40 [kPa] | 3,2 | 2,3 | 5,5 | 4,9 | 3,4 | 2,9 |
| DVR [%] | 2 | 1 | 2 | 3 | 3 | 3 |
| Weitereißfestigkeit [N/m] | 90 | 77 | 114 | 124 | 92 | n.b. |
| viskoelastisch | ja | ja | sehr | sehr | ja | ja |
| pneumatisch | Ja | Ja | sehr | sehr | ja | nein |
| n.b. = nicht bestimmt | | | | | | |

Aus Tabelle 3 und 4 wird deutlich, dass die aus den erfindungsgemäßen, phasenstabilen Polyolformulierungen A-II bis A-VII und A-XI erhaltenen, viskoelastischen Polyurethan-Weichschaumstoffe pneumatische Eigenschaften aufweisen. Das Vergleichsbeispiel PUR I zeigt ebenfalls einen pneumatisch-viskoelastischen Polyurethanschaum, ist aber aufgrund der nicht phasenstabilen Polyolformulierung A-I weniger geeignet. Die Vergleichsbeispiele PUR VIII und PUR IX zeigen, dass ein Polypropylenoxidgehalt von über 8,0 Gew.-Teilen in der Polyolkomponente neben mangelnder Phasenstabilität der Polyolkomponente (A-X und A-XI) zu Polyurethanschäumen führt, die keine oder nur ganz schwache viskoelastischen Eigenschaften aufweisen. Die Schaumstoffe PUR X, PUR XI und PUR XIV zeigen, dass sich auf diese Weise auch Schaumstoffe herstellen lassen, die in Härte und DVR von struktur-viskoelastischen Schaumstoffen (PUR XV, Vergleich, siehe auch Abbildung 1) ähnlich sind.

Abbildung 1 zeigt den Unterschied von pneumatisch- und struktur-viskoelastischen Verhalten der Polyurethanweichschaumstoffe. Hierzu wurde das Torsionspendel gemäß DIN EN ISO 6721 B:1996-12 ermittelt, wobei "Tan delta" aus dem Quotient von Verlustmodul zu Speichermodul erhalten wird. Die durchgezogene Linie in Abbildung 1 zeigt einen Polyurethan-Weichschaum mit pneumatisch viskoelastischen Eigenschaften (Tabelle 4, PUR XII) und einen mit struktur-viskoelastischen Eigenschaften (Tabelle 4, PUR XV). Das jeweilige Maximum der Kurven entspricht den jeweiligen Glasübergangstemperaturen ($T_G$). Der erfindungsgemäße, pneumatisch-viskoelastische Polyurethan-Weichschaumstoff PUR XII weist eine Glasübergangstemperatur von ca. -35°C auf. Der als Vergleichsbeispiel erhaltene struktur-viskoelastische Polyurethan-Weichschaumstoff PUR XV ist durch eine Glasübergangstemperatur von ca. +40°C gekennzeichnet.

**Patentansprüche**

1. Verfahren zur Herstellung eines viskoelastischen Polyurethan-Weichschaumstoffs, erhältlich durch Umsetzung von Komponente A enthaltend:

   A1 90,9 bis 98,9 Gew.-Teile wenigstens eines Polyols mit einer Funktionalität von 2 bis 6, einem Gehalt an $CH_2$-$CH_2$-O-Gruppen (Ethylenoxidgehalt) von 51,0 bis 100 Gew.-%, und einer Hydroxylzahl (OH-Zahl) von ≥ 25 mg KOH/g bis ≤ 140 mg KOH/g, frei von Polyol mit einer OH Zahl von ≥ 150 und ≤ 400 mg KOH/g,
   A2 0 bis 8,0 Gew.-Teile wenigstens eines Polyols mit einer Funktionalität von 2 bis 6, einem Ethylenoxidgehalt von 0 bis 50,9 Gew.-%, und einer OH-Zahl von ≥ 8 mg KOH/g bis ≤ 140 mg KOH/g, frei von Polyol mit einer OH Zahl von ≥ 150 und ≤ 400 mg KOH/g,
   A3 0,5 bis 25,0 Gew.-Teile (bezogen auf die Summe der Gew.-Teile der Komponenten A1 und A2) Wasser und/oder eines physikalischen Treibmittels,
   A4 0,1 bis 8,1 Gew.-Teile (bezogen auf die Summe der Gew.-Teile der Komponenten A1 und A2) Hilfs- und Zusatzstoffe wie

      a) Katalysatoren,
      b) oberflächenaktive Zusatzstoffe,
      c) Pigmente oder Flammschutzmittel,

   mit Komponente B enthaltend Diisocyanate, Polyisocyanate, Mischungen von Diisocyanaten und/oder Polyisocyanaten, deren Mischungen von Isomeren oder Präpolymeren, wobei die Umsetzung bei einer Kennzahl von 50 bis 150 erfolgt, und
   alle Gewichtsteilangaben der Komponenten A1 bis A4 so normiert sind, dass die Summe der Gewichtsteile A1 + A2 in der Zusammensetzung 100 ergibt.

2. Verfahren gemäß Anspruch 1, **dadurch gekennzeichnet, dass** der Anteil der Komponente A1 91,0 bis 98,0 Gew.-Teile beträgt und wenigstens ein Polyol mit einer Funktionalität von 3 bis 6, besonders bevorzugt 3 oder 6, einem Ethylenoxidgehalt von 69,0-99,0 Gew.-% und einer OH-Zahl von ≥ 35 mg KOH/g bis ≤ 112 mg KOH/g enthält und frei von Polyol mit einer OH Zahl von ≥ 150 und ≤ 400 mg KOH/g ist.

3. Verfahren gemäß einem der Ansprüche 1 oder 2, **dadurch gekennzeichnet, dass** der Anteil der Komponente A2 0 bis 5,5 Gew.-Teile beträgt und wenigstens ein Polyetherpolyol mit einer Funktionalität von 3 bis 6 und einer OH-Zahl von ≥ 18 mg KOH/g bis ≤ 120 mg KOH/g, bevorzugt von ≥ 23 mg KOH/g bis ≤ 60 mg KOH/g enthält und frei von Polyol mit einer OH Zahl von ≥ 150 und ≤ 400 mg KOH/g ist.

4. Verfahren gemäß einem der Ansprüche 1 bis 3, **dadurch gekennzeichnet, dass** die Komponente A4 als Katalysator a)

α) Derivate des Harnstoffs und/oder

β) Amine und/oder Aminoether, welche jeweils eine funktionelle Gruppe enthalten, die mit dem Isocyanat chemisch reagiert,

enthält.

5. Verfahren gemäß einem der Ansprüche 1 bis 4, **dadurch gekennzeichnet, dass** die Komponente A frei von Komponente A2 ist.

6. Verfahren gemäß einem der Ansprüche 1 bis 5, **dadurch gekennzeichnet, dass** als Komponente B wenigstens ein Polyisocyanat enthaltend Carbodiimidgruppen und/oder Uretdionimingruppen eingesetzt wird.

7. Verfahren gemäß einem der Ansprüche 1 bis 6, **dadurch gekennzeichnet, dass** als Komponente B ein Präpolymer eingesetzt wird.

8. Verfahren gemäß einem der Ansprüche 1 bis 7, **dadurch gekennzeichnet, dass** das Präpolymer als Komponente B2 Polyetherpolyol mit einer mittleren Funktionalität von 2 bis 6, bevorzugt von 2 bis 3, einem mittleren Gehalt an $CH_2$-$CH_2$-O-Einheiten (Ethylenoxidgehalt) von 0 bis 50,9 Gew.-%, bevorzugt 0 bis 30,0 Gew.-%, besonders bevorzugt von 0 bis 10,0 Gew.-%, und einer mittleren OH-Zahl von $\geq$ 25 mg KOH/g bis $\leq$ 600 mg KOH/g, bevorzugt von $\geq$ 28 mg KOH/g bis $\leq$ 113 mg KOH/g, enthält und einen NCO-Gehalt von 18 bis 28%, bevorzugt von 19,5 bis 25% aufweist.

9. Verfahren gemäß einem der Ansprüche 1 bis 8, **dadurch gekennzeichnet, dass** die bei der Präpolymerisation eingesetzte Komponente B2 wenigstens Polyetherpolyol mit einer mittleren Funktionalität 2, einem mittleren Ethylenoxidgehalt von 0 bis 50,9 Gew.-%, bevorzugt 0 bis 30,0 Gew.-%, besonders bevorzugt von 0 bis 15,0 Gew.-%,und einer mittleren OH-Zahl von $\geq$ 28 mg KOH/g bis $\leq$ 113 mg KOH/g enthält.

10. Verfahren gemäß einem der Ansprüche 8 bis 9, **dadurch gekennzeichnet, dass** das Präpolymer der Komponente B mindestens eine Verbindung ausgewählt aus der Gruppe bestehend aus 4,4'-, 2,4'- und 2,2'-Diphenylmethandiisocyanat und Polyphenylpolymethylenpolyisocyanat ("Mehrkern-MDI"), sowie deren Mischungen enthält.

11. Verfahren gemäß einem der Ansprüche 1 bis 10, **dadurch gekennzeichnet, dass** die Umsetzung bei einer Kennzahl von 65 bis 90 erfolgt.

12. Viskoelastischer Polyurethanschaum erhältlich durch ein Verfahren gemäß einem der Ansprüche 1 bis 11.

13. Viskoelastischer Polyurethanschaum gemäß Anspruch 12 vorliegend als Polyurethan Weichblockschaumstoff.

14. Verwendung des viskoelastischen Polyurethanschaums gemäß Anspruch 12 oder 13 zur Herstellung von Möbelpolsterungen, Textileinlagen, Matratzen, Automobilsitze, Kopfstützen, Armlehnen, Schwämmen, Verbund- und Bauelementen.

**Abbildung 1**

Europäisches
Patentamt

European
Patent Office

Office européen
des brevets

**EUROPÄISCHER RECHERCHENBERICHT**

Nummer der Anmeldung

EP 13 19 5773

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 125 958 A1 (BASF AG [DE]) 22. August 2001 (2001-08-22) * Absatz [0062]; Beispiel 6; Tabelle 1 * | 1-14 | INV. C08G18/48 C08G101/00 |
| X | EP 0 547 765 A1 (ICI PLC [GB]) 23. Juni 1993 (1993-06-23) * Seite 3, Zeilen 35-36; Beispiel 1 * | 1-14 | |
| X | WO 98/34973 A1 (ICI PLC [GB]) 13. August 1998 (1998-08-13) * Seite 8, Zeile 5 - Seite 9, Zeile 9; Beispiel 1 * | 1,5 | |
| X | US 7 208 531 B2 (NEFF RAYMOND A [US] ET AL) 24. April 2007 (2007-04-24) * Beispiel comp.ex.2; Tabelle 1 * | 1,4,12, 14 | |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| Den Haag | 14. April 2014 | Bezard, Stéphane |

**ANHANG ZUM EUROPÄISCHEN RECHERCHENBERICHT
ÜBER DIE EUROPÄISCHE PATENTANMELDUNG NR.**          EP 13 19 5773

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2014

| Im Recherchenbericht angeführtes Patentdokument | Datum der Veröffentlichung | Mitglied(er) der Patentfamilie | Datum der Veröffentlichung |
|---|---|---|---|
| EP 1125958 A1 | 22-08-2001 | DE 10007693 A1 | 23-08-2001 |
| | | EP 1125958 A1 | 22-08-2001 |
| | | ES 2238348 T3 | 01-09-2005 |
| EP 0547765 A1 | 23-06-1993 | AU 651257 B2 | 14-07-1994 |
| | | AU 2856992 A | 24-06-1993 |
| | | CA 2084807 A1 | 18-06-1993 |
| | | CN 1088222 A | 22-06-1994 |
| | | CN 1215063 A | 28-04-1999 |
| | | DE 69220338 D1 | 17-07-1997 |
| | | DE 69220338 T2 | 06-11-1997 |
| | | EP 0547765 A1 | 23-06-1993 |
| | | ES 2102472 T3 | 01-08-1997 |
| | | HK 1004559 A1 | 27-11-1998 |
| | | JP 3242720 B2 | 25-12-2001 |
| | | JP H05262845 A | 12-10-1993 |
| | | US 6245825 B1 | 12-06-2001 |
| WO 9834973 A1 | 13-08-1998 | AU 728024 B2 | 04-01-2001 |
| | | AU 6495698 A | 26-08-1998 |
| | | BR 9807217 A | 23-05-2000 |
| | | CA 2284462 A1 | 13-08-1998 |
| | | CN 1246873 A | 08-03-2000 |
| | | CZ 9902812 A3 | 17-11-1999 |
| | | DE 69801421 D1 | 27-09-2001 |
| | | DE 69801421 T2 | 23-05-2002 |
| | | EP 0960150 A1 | 01-12-1999 |
| | | ES 2162702 T3 | 01-01-2002 |
| | | HU 0000899 A2 | 28-07-2000 |
| | | ID 22174 A | 09-09-1999 |
| | | JP 2001512501 A | 21-08-2001 |
| | | NZ 337144 A | 30-03-2001 |
| | | PL 335060 A1 | 27-03-2000 |
| | | SK 108399 A3 | 18-01-2000 |
| | | TR 9901873 T2 | 21-10-1999 |
| | | US 6133481 A | 17-10-2000 |
| | | WO 9834973 A1 | 13-08-1998 |
| US 7208531 B2 | 24-04-2007 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 3806476 A
- EP 0000389 A
- EP 0176013 A
- EP 0007502 A
- EP 355000 A

**In der Beschreibung aufgeführte Nicht-Patentliteratur**

- **VON G. OERTEL.** Kunststoff-Handbuch. Carl-Hanser-Verlag, 1993, vol. VII, 104-127
- **VON W. SIEFKEN.** *Justus Liebigs Annalen der Chemie,* vol. 562, 75-136
- **VON VIEWEG ; HÖCHTLEN.** Kunststoff-Handbuch. Carl-Hanser-Verlag, 1993, vol. VII, 139-265